# EUROPEAN PATENT SPECIFICATION

(11) **EP 1 567 319 B1**
(45) Date of publication and mention of the grant of the patent: **14.10.2009**
(21) Application number: 02781166.0
(22) Date of filing: 21.11.2002
(51) Int. Cl.: B29C 47/00

(54) **SHEAR CONTROLLING APPARATUS FOR AN EXTRUDER**
SCHERSTEUERVORRICHTUNG FÜR EINEN EXTRUDER
APPAREIL DE COMMANDE DU CISAILLEMENT DESTINE A UNE EXTRUDEUSE

(43) Date of publication of application: 31.08.2005
(73) Proprietor: ANDRITZ SPROUT A/S, 6705 Esbjerg Ø (DK)
(72) Inventor: JORGENSEN, Thomas, DK-6000 Kolding (DK)
(74) Representative: Tonnesen, Bo
(86) International application number: PCT/DK2002/000784
(87) International publication number: WO 2004/045827

(56) References cited:
- EP-A- 0 888 860
- US-A- 4 152 077
- US-A- 5 700 510
- US-B1- 6 261 081
- US-B1- 6 345 972

## Description

### TECHNICAL FIELD

The present invention relates to a shear controlling apparatus of the kind set forth in the preamble of claim 1 and a method of operating said apparatus.

### BACKGROUND ART

From US-5,700,510 it is known to provide a variable restriction between the screw conveyor and the die plate in an extruder, said variable restriction providing a possibility of controlling the shear in the screw conveyor, and thus the mechanical energy delivery to the product in the screw conveyor of the extruder. However, this variable restriction provides a non-symmetrical restriction, which causes turbulence and uneven distribution of the flow through the restriction and through the different openings in the die plate, which will lead to non-uniform products produced by the extruder unless special configurations of the end of the extruder or pumping device are made. Such configurations are typically not contributing to any improvements of the product quality. A symmetrical and laminar flow is essential in order to obtain and even pressure at all die holes- Therefore it is preferred to use a spacer ring after the restriction before the die plate in order to stabilise the material flow.

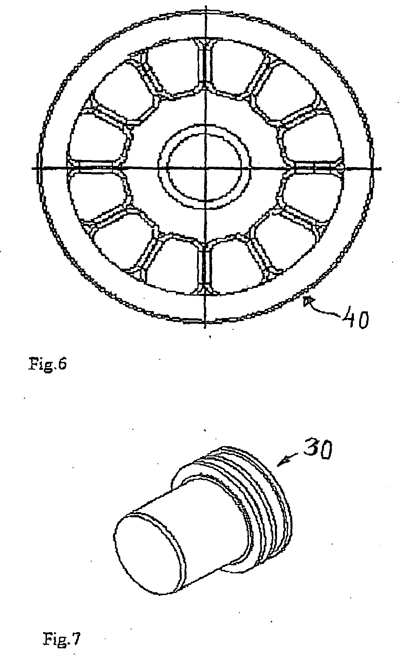

From EP-0,888,860 it is known to provide an extruder with a variable restriction positioned between the conveying means and the die plates, said variable restriction also being exemplified (in Fig. 6) by an annular insert and a co-axially mounted piston, movable relative to one another in the axial direction for changing the flow resistance. However, this symmetrical flow resistance is only changeable using tools and manual adjustment and is thus not suited for a dynamic control. The other examples in this document show dynamically controllable restrictions which, however, do not provide a symmetrical flow through the restriction.

### BRIEF DESCRIPTION OF THE INVENTION

Based on this prior art, it is the object of the present invention to provide an extruder comprising a screw conveyor or any other pumping device in which the above problems are solved, and this is achieved by the features set forth in the characterising clause of claim 1. By having a symmetrical restriction and a piston-cylinder control of the relative positions of the annular insert and the piston, it is possible to perform a dynamic control of the shear in the screw conveyor of the extruder and maintain the symmetrical flow to the die plate, keeping uniform flow through all of the openings of the die plate, resulting in uniform products with controlled quality.

Preferred embodiments of the invention, the advantages of which will be evident from the following detailed description, are revealed in the sub-ordinate claims.

### BRIEF DESCRIPTION OF THE DRAWINGS

In the following detailed part of the present description, the invention will be explained in more detail with reference to the exemplary embodiments of a shear controlling apparatus for an extruder according to the invention shown in the drawings, in which
Figure 1 schematically shows an extruder, in which the present invention can be implemented, and
Figures 2-7 show the individual components of a preferred embodiment of the present invention.

### DESCRIPTION OF THE PREFERRED EMBODIMENTS

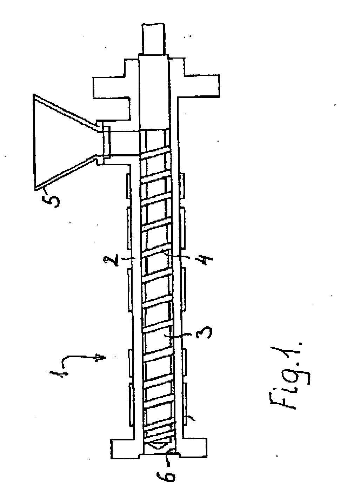

The extruder apparatus 1 shown in Figure 1 comprises a barrel 2 in which a screw conveyor 3, 4 is positioned for rotational movement in order to pump the material to be extruded from the inlet hopper 5 towards the outlet 6. The extruder outlet 6 is normally provided with a series of components ending up in a die plate comprising a number of holes through which the material is extruded, and possibly a rotating knife rotating along the outer surface of said die plate, for cutting off the extruded material, for providing suitably equally sized pellets of extruded material.

An extruder of this type can be used for producing different types of food and feed products, but in principle all products in which a viscosity change is requested by means of shear, using different raw materials introduced through the inlet funnel 5, which raw material is subjected to shear by the conveying means 2, 3, 4, whereby it is heated for cooking inside the barrel 2, and the shear can be increased by inserting stationary shear locks between separate sections of the screw conveyor 3, 4. Furthermore, different components inserted between the conveying means 2, 3, 4 and the die plate (not shown) can be used for increasing the pressure against which the conveying means works, thus increasing the shear in the extruder. It is also possible to introduce steam into the barrel 2 or to heat the barrel from the outside by means of suitable heating elements positioned along the barrel 2.

It is obvious for a man skilled in the art that the screw conveyor shown in Figure 1 may be substituted by any other type of conveyor providing a pumping function and a kneading and shear providing function, corresponding to the pumping, shear and kneading function provided by the screw conveyor 3, 4. Furthermore, the screw conveyor may consist of several screws, typically two screws, but additional screws can also be provided.

In order to provide a dynamical control of the shear, to which the material is subjected during its conveyance through the conveying means 2, 3, 4, a variable restriction is positioned between the conveying means 2, 3, 4 and the die plate.

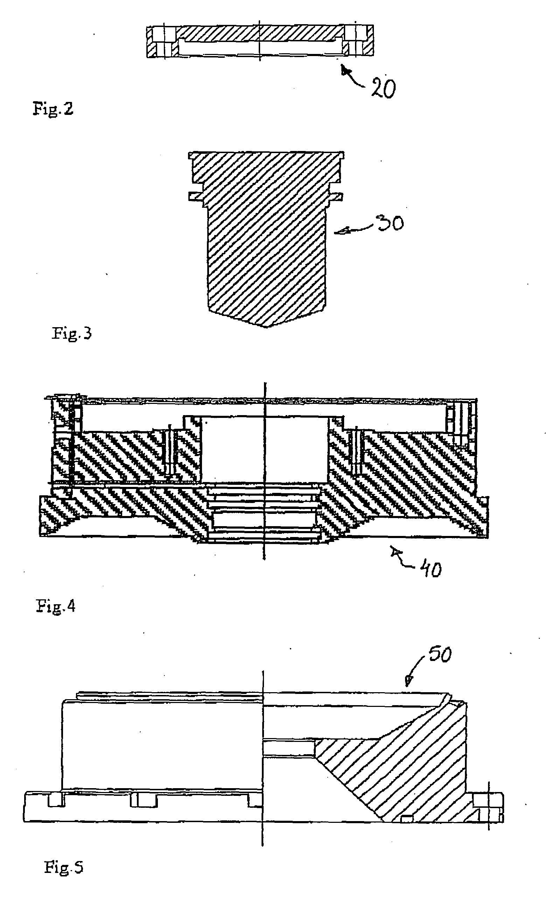

In accordance with a preferred embodiment, the variable restriction is provided by means of the components shown in Figures 2-7, as described in the following.

The variable restriction comprises a die neck, shown in Figure 5, which is an annular insert comprising a circular opening, through which material is delivered from the conveying means 3, 4. Downstream of this annular insert is mounted a die base insert, shown in Figure 4 in cross-section and in Figure 6 in front elevational view, said die base comprising radially extending plate-formed spokes or vanes connecting a central mainly circular part and an annular ring-formed outer part, said plate-formed spokes allowing the material to pass through the die base in the axial direction and reducing possible rotational movement of the material imposed by the conveying means 2, 3, 4. In the central circular part of the die base there is mounted a piston, shown in Figure 3 and Figure 7, for axial movement, whereby said piston can be moved in its position relative to the circular opening in the die neck shown in Figure 5, said axial movement of the piston controlling the opening between the piston and the circular opening in the die neck. After mounting the piston shown in Figure 3 in the central part of the die base shown in Figure 4, an end plate shown in Figure 2 is mounted on the die base for closing the piston cylinder unit, which is used to move the piston shown in Figure 3 inside the central part of the die base. Suitable hydraulic connections are provided in the die base, said hydraulic connections being formed inside the radially extending plate-formed spokes, whereby hydraulic fluid can be supplied and withdrawn from the two sides of the hydraulic drive system for the piston.

It will be evident for a man skilled in the art that the above described variable restriction can be constructed in many other ways without departing from the main principle, namely that the variable restriction is constructed to provide a symmetrical flow through the variable restriction. In the, described embodiment, it is the piston shown in Figures 3 and 7, which is moved relative to the circular opening in the die neck, but a movement of the circular opening in the die neck relative to the piston could also be used for providing the variability of the restriction. In the embodiment shown and described above, the piston and the opening in the die neck are circular and the piston has a frusto-conical surface directed towards the circular opening, but other formations of the piston and the opening could be envisaged. Furthermore, the piston could be mounted in the die plate and the die base could be omitted in the construction.

By means of the variable restriction in accordance with the present invention, it is possible to provide a dynamical control of the shear in the screw conveyor or other conveying means used in the extruder, whereby it is possible to compensate for variations in the parameters for the raw material delivered to the extruder. It will thus be possible to provide a more precise control of the shear in the extruder, thus providing an improved utilisation of essential raw materials in the process and an improved functionality of the raw materials resulting in improved product quality.

Preferably, the variable restriction is adjusted in such a way that a predetermined power delivery to the conveying means can be maintained, and furthermore, it is possible to measure the pressure inside the extruder and the flow of material, in order to optimise the process parameters for the extrusion process, e.g. providing a constant relation between the power delivery to the conveying means and the flow rate of the material, or a constant relation between the power delivery to the conveying means and the meal viscosity of the material, etc.

## Claims

1. Extruder (1) comprising shear controlling means, said extruder (1) comprising a conveying means (2, 3, 4), a die plate and a variable restriction positioned between the conveying means (2, 3, 4) and the die plate, said variable restriction comprising an annular insert (50) and a co-axially mounted piston (30) movable relative to one another in the axial direction for changing the flow resistance, **characterised by** the relative positions of the annular insert (50) and the co-axially positioned piston (30) being controlled by means of a piston cylinder unit, said piston (30) being mounted in a die base insert (40) positioned downstream of the conveying means (2, 3, 4) and the piston-cylinder unit being incorporated in the die base insert (40).

2. Apparatus in accordance with claim 1, **characterised by** said annular insert (50) comprising a circular opening and said piston (30) having a circular cross-section.

3. Apparatus in accordance with claim 2, **characterised by** said annular insert (50) and/or said piston (30) having a frusto-conical formation directed towards one another.

4. Apparatus in accordance with any of the preceding claims, **characterised by** the die base insert (40) comprising radially extending vanes providing a resistance against rotational movement of the extruded material passing by this insert.

5. Apparatus in accordance with any of the preceding claims, **characterised by** the hydraulic connection to the piston-cylinder unit being provided through the radial vanes of the die base insert (40).

6. Apparatus in accordance with any of the preceding claims, **characterised by** the die plate comprising axially extending die openings.

7. Apparatus in accordance with any of the preceding claims 1-6, **characterised by** the die plate comprising radially extending die openings.

8. Apparatus in accordance with any of the preceding claims, **characterised by** the conveying means (2, 3, 4) being provided in the form of a screw conveyor (3, 4).

9. Apparatus in accordance with claim 8, **characterised by** the screw conveyor (3, 4) being provided in the form of a multiple screw conveyor.

10. Method of operating an apparatus in accordance with any of the preceding claims, **characterised by** comprising
a) measuring the power delivered to the conveying means (2, 3, 4), and
b) controlling the variable restriction to achieving a predetermined power delivery to the conveying means (2, 3, 4).

11. Method in accordance with claim 10, **characterised by** further comprising
c) measuring the pressure inside the extruder (2, 3, 4), and
d) using said measurement of the pressure as a parameter for the control of the variable restriction.

12. Method of operating an apparatus in accordance with claim 10 or 11, **characterised by** further comprising measuring the flow of material and controlling the variable restriction to achieve a constant relation between the power delivery to the conveying means and the flow rate of the material.

13. Method of operating an apparatus in accordance with claim 10, **characterised by** further comprising measuring the meal viscosity of the material and controlling the variable restriction to achieve a constant relation between the power delivery to the conveying means and the meal viscosity of the material.

## Patentansprüche

1. Extruder (1) mit Schersteuermitteln, welcher besagte Extruder (1) eine Fördervorrichtung (2, 3, 4), eine Matrizenplatte und eine zwischen der Fördervorrichtung (2, 3, 4) und der Matrizenplatte positionierte variable Drosselung umfasst, welche variable Drosselung einen ringförmigen Einsatz (50) und einen koaxial montierten Kolben (30) umfasst, welche zur Änderung des Strömungswiderstandes im Verhältnis zueinander in axialer Richtung bewegbar sind, **dadurch gekennzeichnet, dass** die Positionen des ringförmigen Einsatzes (50) und des koaxial positionierten Kolbens (30) im Verhältnis zueinander mit Hilfe einer Kolben-Zylindereinheit gesteuert werden, dass der besagte Kolben (30) in einem stromabwärts der Fördervorrichtung (2, 3, 4) positionierten Matrizenbasiseinsatz (40) montiert ist, und dass die Kolben-Zylindereinheit in dem Matrizenbasiseinsatz (40) inkorporiert ist.

2. Vorrichtung gemäss Anspruch 1, **dadurch gekennzeichnet, dass** der besagte ringförmige Einsatz (50) eine kreisrunde Öffnung umfasst und der besagte Kolben (30) einen kreisrunden Querschnitt aufweist.

3. Vorrichtung gemäss Anspruch 2, **dadurch gekennzeichnet, dass** der besagte ringförmige Einsatz (50) und/oder der besagte Kolben (30) als aufeinander gerichtete abgestumpfte Kegel ausgebildet sind.

4. Vorrichtung gemäss einem jeglichen der vorhergehenden Ansprüche, **dadurch gekennzeichnet, dass** der Matrizenbasiseinsatz (40) radial verlaufende Flügel umfasst, die der Drehbewegung des extrudierten Materials, das durch diesen Einsatz hindurchpassiert, Widerstand leisten.

5. Vorrichtung gemäss einem jeglichen der vorhergehenden Ansprüche, **dadurch gekennzeichnet, dass** die hydraulische Verbindung zur Kolben-Zylindereinheit durch die radialen Flügel des Matrizenbasiseinsatzes (40) erzielt wird.

6. Vorrichtung gemäss einem jeglichen der vorhergehenden Ansprüche, **dadurch gekennzeichnet, dass** die Matrizenplatte axial verlaufende Matrizenöffnungen umfasst.

7. Vorrichtung gemäss einem jeglichen der vorhergehenden Ansprüche 1-6, **dadurch gekennzeichnet, dass** die Matrizenplatte radial verlaufende Matrizenöffnungen umfasst.

8. Vorrichtung gemäss einem jeglichen der vorhergehenden Ansprüche, **dadurch gekennzeichnet, dass** die Fördervorrichtung (2, 3, 4) in Form eines Schneckenförderers (3, 4) erstellt ist.

9. Vorrichtung gemäss Anspruch 8, **dadurch gekennzeichnet, dass** der Schneckenförderer (3, 4) in Form eines multiplen Schneckenförderers erstellt ist.

10. Verfahren zur Bedienung einer Vorrichtung gemäss einem jeglichen der vorhergehenden Ansprüche, **dadurch gekennzeichnet, dass** es folgendes umfasst:
a) Messung der zur Fördervorrichtung (2, 3, 4) zugeführten Energie, und
b) Steuerung der variablen Drosselung zur Erzielung einer vorherbestimmten Energiezufuhr zu der Fördervorrichtung (2, 3, 4).

11. Verfahren gemäss Anspruch 10, **dadurch gekennzeichnet, dass** es weiterhin umfasst:
c) Messung des Druckes innerhalb des Extruders (2, 3, 4), und
d) Benutzung der besagten Druckmessung als Parameter für die Steuerung der variablen Drosselung.

12. Verfahren zur Bedienung einer Vorrichtung gemäss Anspruch 10 oder 11, **dadurch gekennzeichnet, dass** es weiterhin die Messung der Materialienströmung und die Steuerung der variablen Drosselung umfasst zur Erzielung eines konstanten Verhältnisses zwischen der Energiezufuhr zu der Fördervorrichtung und der Strömungsgeschwindigkeit des Materials.

13. Verfahren zur Bedienung einer Vorrichtung gemäss Anspruch 10, **dadurch gekennzeichnet, dass** es weiterhin die Messung der Mahlviskosität des Materials und die Steuerung der variablen Drosselung umfasst zur Erzielung eines konstanten Verhältnisses zwischen der Energiezufuhr zu der Fördervorrichtung und der Mahlviskosität des Materials.

## Revendications

1. Extrudeuse (1) comprenant des moyens de commande de cisaillement, ladite extrudeuse (1) comprenant un moyen de transport (2, 3, 4), un plateau matrice et une restriction variable positionnés entre le moyen de transport (2, 3, 4) et le plateau matrice, ladite restriction variable comprenant une insertion annulaire (50) et un piston monté coaxialement (30) orientable l'un par rapport à l'autre dans la direction axiale pour modifier la résistance à l'écoulement, **caractérisé en ce que** les positions relatives de l'insertion annulaire (50) et le piston positionné coaxialement (30) soient commandés par moyen d'une unité de piston-cylindre, ledit piston (30) étant monté dans une insertion du plateau matrice (40) positionnée en aval du moyen de transport (2, 3, 4) et l'unité de piston-cylindre étant incorporée dans l'insertion du plateau matrice (40).

2. Appareil selon la revendication 1, **caractérisé en ce que** ladite insertion annulaire (50) comprenne une ouverture circulaire et que ledit piston (30) ait une coupe transversale circulaire.

3. Appareil selon la revendication 2, **caractérisé en ce que** ladite insertion annulaire (50) et/ou ledit piston (30) aient une forme de cône tronqué dirigée l'un vers l'autre.

4. Appareil selon l'une quelconque des revendications précédentes, **caractérisé en ce que** l'insertion du plateau matrice (40) comprenne des ailettes s'étendant radialement et qui fournissent une résistance contre le mouvement rotatif de la matière extrudée qui passe par cette insertion.

5. Appareil selon l'une quelconque des revendications précédentes, **caractérisé en ce que** la jonction hydraulique à l'unité piston-cylindre soient réalisée à travers les ailettes radiales de l'insertion du plateau matrice (40).

6. Appareil selon l'une quelconque des revendications précédentes, **caractérisé en ce que** le plateau matrice comprenne des ouvertures de matrice s'étendant axialement.

7. Appareil selon l'une quelconque des revendications précédentes 1 à 6, **caractérisé en ce que** le plateau matrice comprenne des ouvertures de matrice s'étendant radialement.

8. Appareil selon l'une quelconque des revendications précédentes, **caractérisé en ce que** le moyen de transport (2, 3, 4) soit fourni sous la forme d'un transporteur à vis (3, 4).

9. Appareil selon la revendication 8, **caractérisé en ce que** le transporteur à vis (3, 4) soit fourni sous la forme d'un transporteur à vis multiple.

10. Procédé de maniement d'un appareil selon l'une quelconque des revendications précédentes, **caractérisé en ce qu'**il comprenne
a) le mesurage de la puissance livrée au moyen de transport (2, 3, 4), et
b) la commande de la restriction variable pour atteindre une livraison de puissance prédéterminée au moyen de transport (2, 3, 4).

11. Procédé selon la revendication 10, **caractérisé en ce qu'**il comprenne en outre
c) le mesurage de la pression à l'intérieur de l'extrudeuse (2, 3, 4), et
d) l'utilisation dudit mesurage de la pression comme paramètre pour la commande de la restriction variable.

12. Procédé de maniement d'un appareil selon les revendications 10 ou 11, **caractérisé en ce qu'**il comprenne en outre le mesurage de flux de matières et la commande de la restriction variable pour atteindre une relation constante entre la livraison de puissance au moyen de transport et le débit de la matière.

13. Procédé de maniement d'un appareil selon la revendication 10, **caractérisé en ce qu'**il comprenne en outre la mesure de la viscosité de moulage de la matière et la commande de la restriction variable pour atteindre une relation constante entre la livraison de puissance au moyen de transport et la viscosité de moulage de la matière.
